# EUROPEAN PATENT APPLICATION

(11) **EP 4 394 192 A1**
(43) Date of publication of application: **03.07.2024**
(21) Application number: 23181826.1
(22) Date of filing: 27.06.2023
(51) Int. Cl.: F16B 25/00, F16B 25/10

(54) **SCREW**

(30) Priority: 29.12.2022 TW 111214554 U
(71) Applicant: Ho, Jen-Tong, Taichung City 40759 (TW)
(72) Inventor: Ho, Jen-Tong, Taichung City 40759 (TW)
(74) Representative: Cabinet Chaillot

(57) **Abstract**

A screw includes a shank and a threaded section spirally formed on the shank. The threaded section includes threaded units having a length greater than a pitch, each threaded unit including a closed curve having two opposing first curved sections and two opposing second curved sections. Each threaded unit is further provided with two opposing high points each formed between the first curved section and the adjacent second curved section and two opposing low points each formed between the first curved section and the adjacent second curved section. Width of the threaded unit at the high points is the greatest and width of the threaded unit at the low points is the least. The width of the threaded unit is decreased from the high point to the low point.

## Description

### FIELD OF THE INVENTION

The invention relates to screws and more particularly to a screw having improved characteristics including labor saving and increased fastening effect.

### BACKGROUND OF THE INVENTION

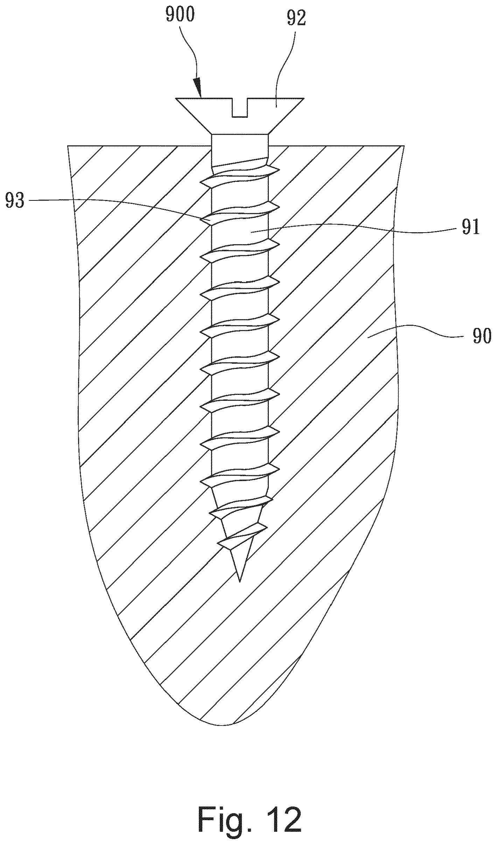

A conventional screw 900 driven into a wooden work piece 90 is shown in Fig. 12. The screw 900 includes a shank 91, a head 92 at a top end of the shank 91, and a threaded section 93 spirally formed on an outer surface of the shank 91. The surfaces of the shank 91 and the threaded section 93 advance along a depth direction of the work piece 90 when the screw 900 is driven into the work piece 90. There is friction between the surfaces of the shank 91 and the threaded section 93 and the work piece 90. Thus, an individual has to exert a great force (i.e., being labor intensive) in the fastening process. It is often that the screw 900 may be broken due to the great force. Further, the fastening effect produced by the screw 900 is not sufficient. And in turn, it limits applications when a sufficient fastening effect produced by the screw 900 is required. Thus, the need for improvement still exists.

### SUMMARY OF THE INVENTION

It is therefore one object of the invention to provide a screw comprising a shank; and a threaded section spirally formed on an outer surface of the shank, the threaded section including a plurality of joined threaded units each having a length greater than a pitch, each of the threaded units including a closed curve having two opposing first curved sections and two opposing second curved sections; wherein one first curved section is disposed between the two second curved sections and one second curved section is disposed between the two first curved sections; wherein each of the threaded units further comprises two opposing high points each formed between the first curved section and the adjacent second curved section and two opposing low points each formed between the first curved section and the adjacent second curved section; wherein one high point is disposed between the two low points and one low point is disposed between the two high points; wherein a width of the threaded unit at the high points is the greatest and a width of the threaded unit at the low points is the least; and wherein the width of the threaded unit is decreased from the high point to the low point.

The invention has the following advantages and benefits in comparison with the conventional art: when the screw is driven into a work piece, the widest and highest point of the threaded unit is a joined portion of the first curved section and the second curved section, i.e., at the high point. A gap is formed between the work piece and any portion of the threaded unit other than the high point. The gap is adapted to decrease friction between the threaded unit and the work piece. Thus, the threaded fastening can be made labor saving. The projections are adapted to spread the work piece and generate a gap between the shank and the work piece. Thus, a contact area of the work piece and the shank is decreased, thereby decreasing friction between the work piece and the shank. As a result, the fastening of the work piece by the screw can be further made labor saving. In addition, after the screw has driven into the work piece, an arch-shaped surface formed by rear portions of the wings, i.e., as a hook. The hook may increase the fastening effect produced by the screw.

The above and other objects, features and advantages of the invention will become apparent from the following detailed description taken with the accompanying drawings.

### BRIEF DESCRIPTION OF THE DRAWINGS

Fig. 1 is a side elevation of a screw according to a first preferred embodiment of the invention;
Fig. 2 is a sectional view taken along line 2-2 of Fig. 1;
Fig. 3A is a top plan view of the threaded section which has been extended;
Fig. 3B is a side elevation of the extended threaded section in Fig. 3A;
Fig. 4 is a detailed view of the projection and the threaded section adjacent thereto in Fig. 1;
Fig. 5 is a sectional view taken along line 5-5 of Fig. 4;
Fig. 6 is a sectional view taken along line 6-6 of Fig. 4;
Fig. 7 schematically depicts the screw driven into a work piece and details of the area in a circle;
Fig. 8 is a side elevation of a screw according to a second preferred embodiment of the invention;
Fig. 9 is a detailed view of the projections and the threaded section adjacent thereto in Fig. 8;
Fig. 10 is a sectional view taken along line 10-10 of Fig. 9;
Fig. 11 is a sectional view taken along line 11-11 of Fig. 9; and
Fig. 12 schematically depicts a conventional screw driven into a work piece.

### DETAILED DESCRIPTION OF THE INVENTION

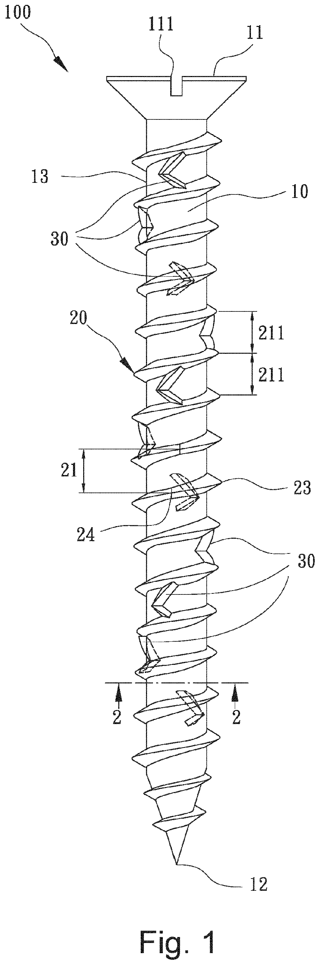

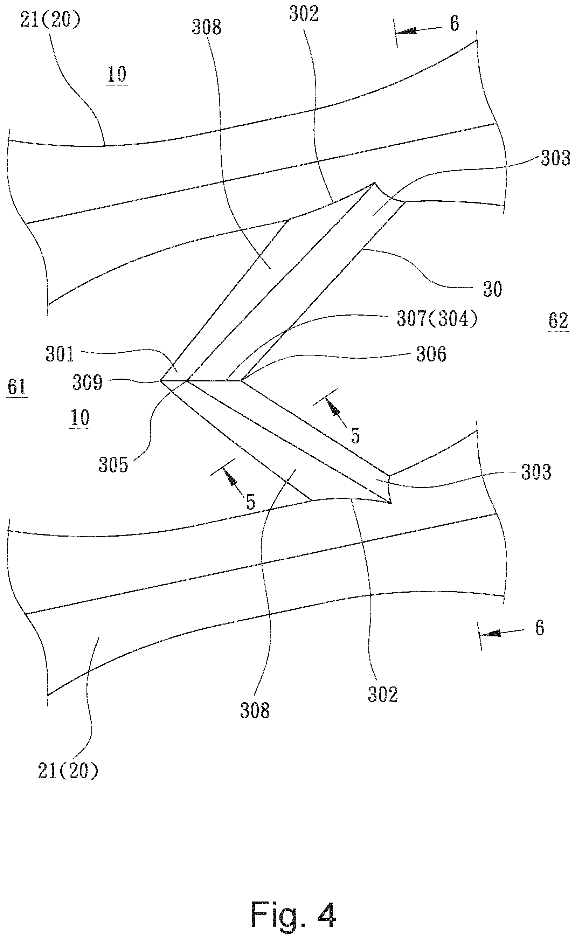

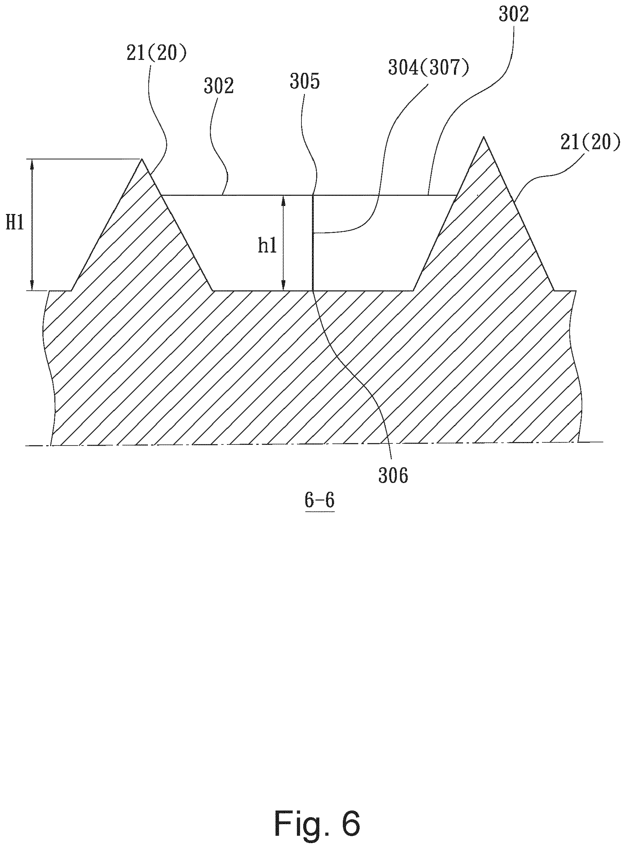

Referring to Figs. 1 to 7, a screw 100 in accordance with a first preferred embodiment of the invention comprises a shank 10, a threaded section 20, and a plurality of projections 30 as discussed in detail below.

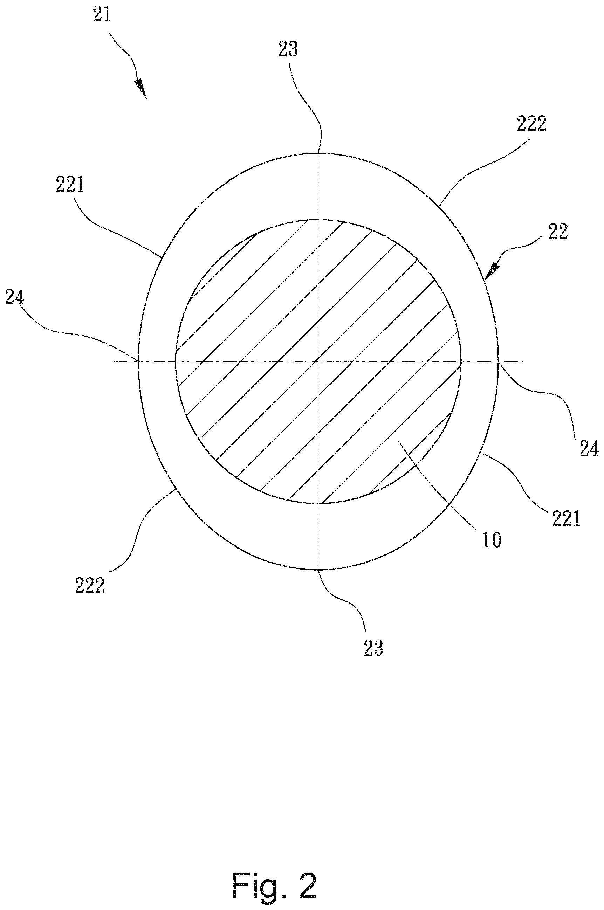

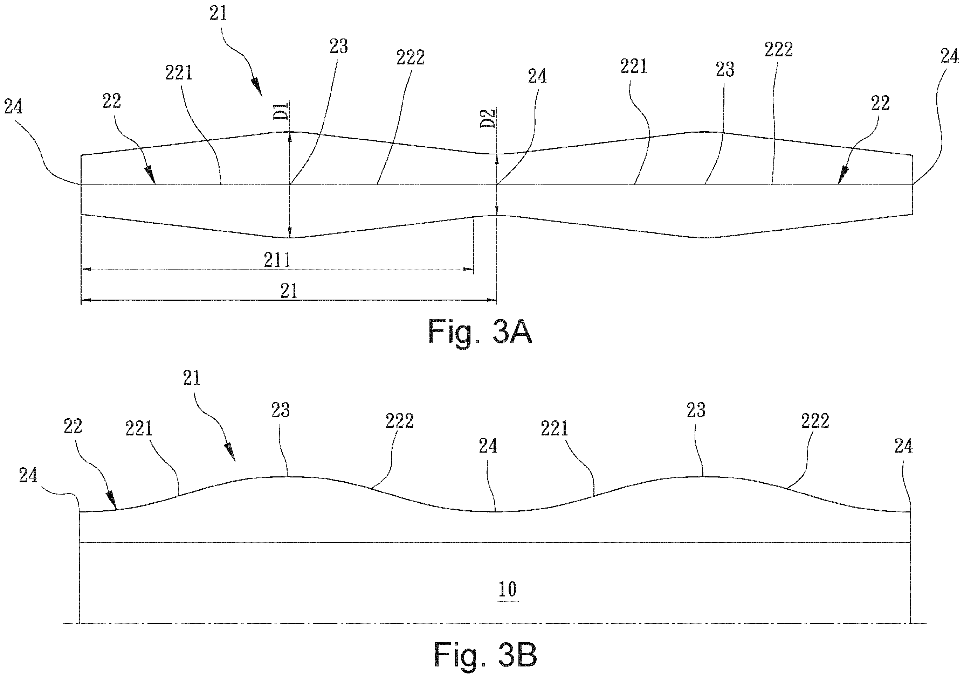

The shank 10 includes an outer surface 13, a head 11 having a slot 111 for allowing a tip of a screw driver to put into, and a tip 12. The threaded section 20 is spirally formed on the outer surface 13 and includes a plurality of threaded units 21 having an oval cross-section (see Fig. 2). As shown in Figs. 1 and 3A, the length of the threaded unit 21 is greater than a pitch 211 and the threaded unit 21 crosses an angle of more than 360 degrees on the outer surface. In the embodiment, the angle is 372 degrees.

As shown in Fig. 2, the threaded unit 21 includes an oval curve 22 having two opposing first curved sections 221 and two opposing second curved sections 222. That is, one first curved section 221 is disposed between the two second curved sections 222 and one second curved section 222 is disposed between the two first curved sections 221. Two opposing high points 23 each are formed between the first curved section 221 and the second curved section 222 and two opposing low points 24 each are formed between the first curved section 221 and the second curved section 222. All points of the oval curve 22 do not have same elevation. That is, the oval curve 22 consists of one first curved section 221, one second curved section 222, the other first curved section 221, and the other second curved section 222 joined as a whole, i.e., the wavy threaded unit 21. One threaded unit 21 is formed with another threaded unit 21 and so on until reaching the tip 12. The joined high points 23 are shaped as a spiral viewed from the top and the joined low points 24 are shaped as a spiral viewed from the top (see Fig. 1). As shown in Fig. 3A, width of the threaded unit 21 is decreased from the high point 23 to the low point 24. Thus, the width D1 between the opposing high points 23 is the greatest and the width D2 between the opposing low points 24 is the least. In the embodiment, the projection 30 is disposed between any two adjacent threaded units 21 on the outer surface 13. The projection 30 is spirally shaped and inclined. Specifically, the orientations of the projections 30 are the same as that of the threaded section 20, i.e., being clockwise spiral. Alternatively, the orientations of the projections 30 are counterclockwise spiral or straight as the axis of the spiral 10. Further, a plurality of projections 30 can be formed between any two adjacent threaded units 21.

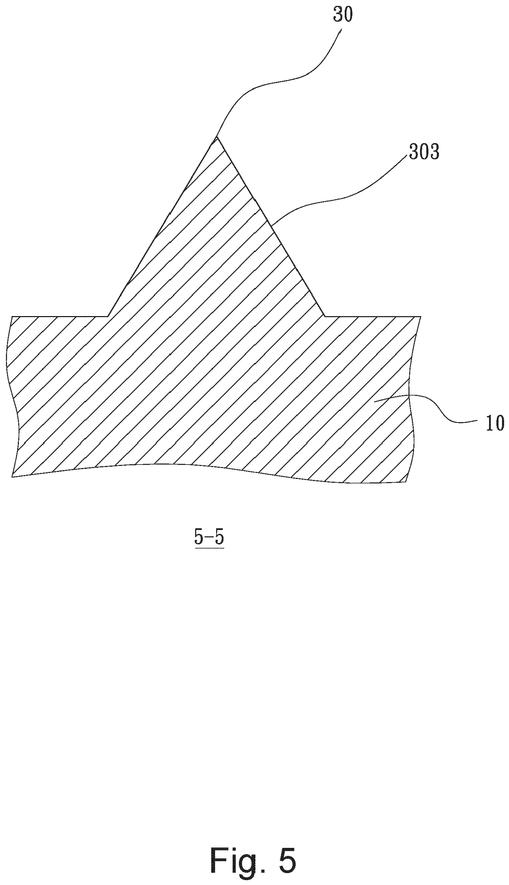

The projection 30 includes a tip section 301 having a tip 309 and two wings 302 each extending rearward from the tip section 301 to the threaded unit 21. The orientation of the front end of the projection 30 to the rear end thereof is the same as that of the spiral threaded section 20. The wings 302 each are swept and have a triangular cross-section (see Fig. 5). All points of the wing 302 are of the same elevation. The wing 302 has a rear elongated inclined surface 303 and a forward elongated inclined surface 308. Height of a front end 61 of the rear elongated inclined surface 303 (or the forward elongated inclined surface 308) and height of a rear end 62 of the rear elongated inclined surface 303 (or the forward elongated inclined surface 308) are the same. In the embodiment, the rear end of the wing 302 is formed with the adjacent threaded unit 21 and the front ends of the wings 302 are joined by a line 304 which is implemented as a straight line 307 having a top end 305 and a bottom end 306. An inclined line is formed from the top end 305 to the bottom end 306. Height h1 of the wing 302 (i.e., height of the top end 305) is less that height H1 of the threaded unit 21. As shown in Fig. 1, the solid lines of the projections 30 mean the visible portions of the projections 30 on the front of the shank 10 and the broken lines thereof mean the invisible portions of the projections 30 on the back of the shank 10.

Details of the components of the screw 100 have been discussed above and use thereof is detailed below.

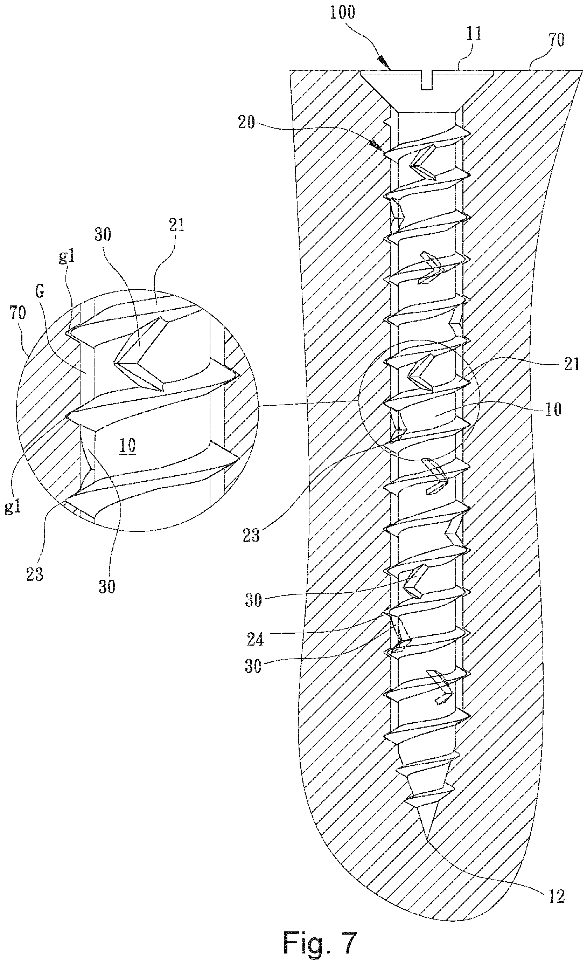

As shown in Fig. 7 specifically, when the screw 100 is driven into a work piece 70, the widest and highest point of the threaded unit 21 is a joined portion of the first curved section 221 and the second curved section 222, i.e., at the high point 23. The high points 23 are used to drive through the work piece 70 and spread same. The threaded unit 21 has the widest and the highest point at the high points 23 and other portions of the threaded unit 21 have width and height less than that of the high points 23. A gap g1 is formed between the work piece 70 and any portion of the threaded unit 21 other than the high point 23 when the high points 23 drive through the work piece 70. The gap g1 is adapted to decrease friction between the threaded unit 21 and the work piece 70. Thus, the threaded fastening can be made labor saving. The provisions of the tip section 301 having the tip 309 and the wings 302 of the projection 30 facilitates the driving of the screw 100 through the work piece 70. The projections 30 are adapted to spread the work piece 70 and generate a gap G between the shank 10 and the work piece 70. Thus, a contact area of the work piece 70 and the shank 10 is decreased, thereby decreasing friction between the work piece 70 and the shank 10. As a result, the fastening of the work piece 70 by the screw 100 is made labor saving. Further, after the screw 100 has driven into the work piece 70, an arch-shaped surface formed by rear portions of the wings 302, i.e., as a hook. The hook may increase the fastening effect produced by the screw 100. This is a great improvement in comparison with the conventional screws.

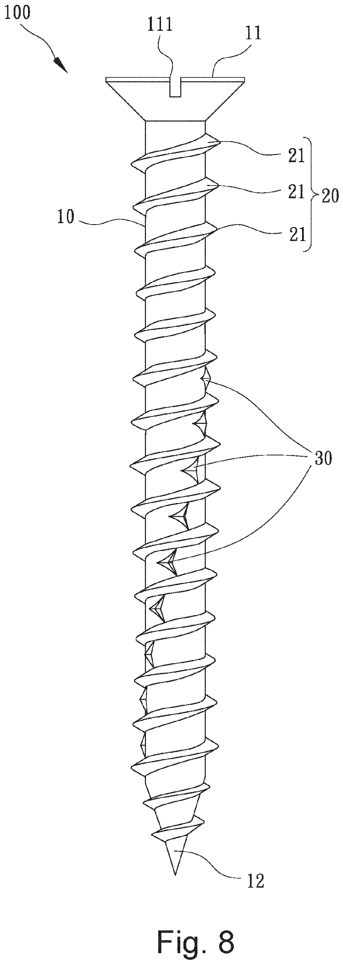

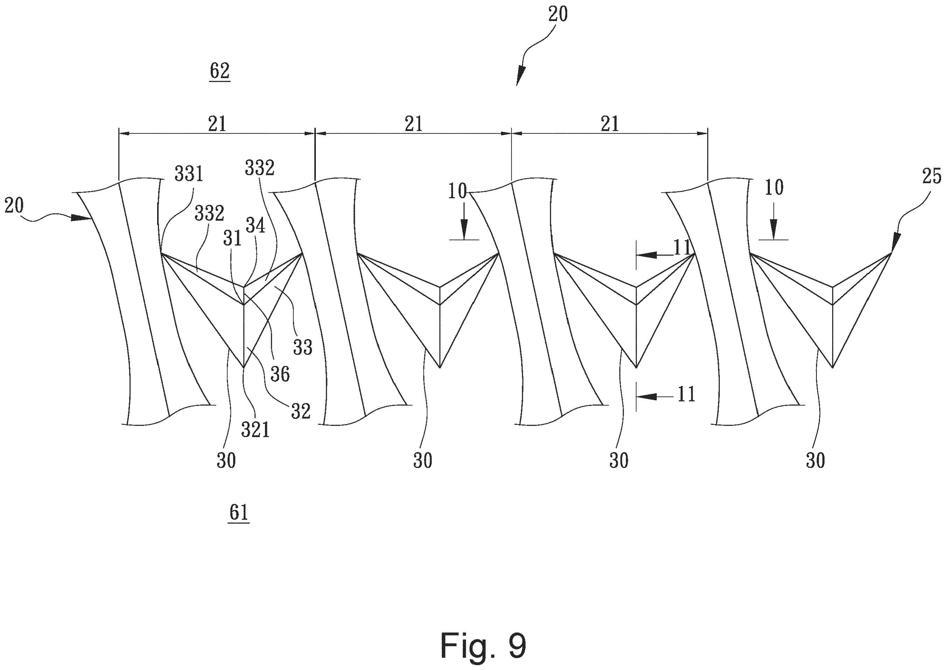

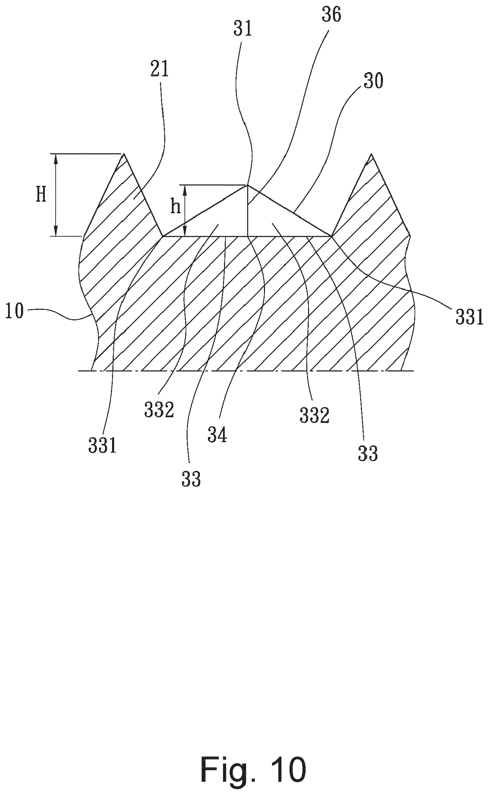

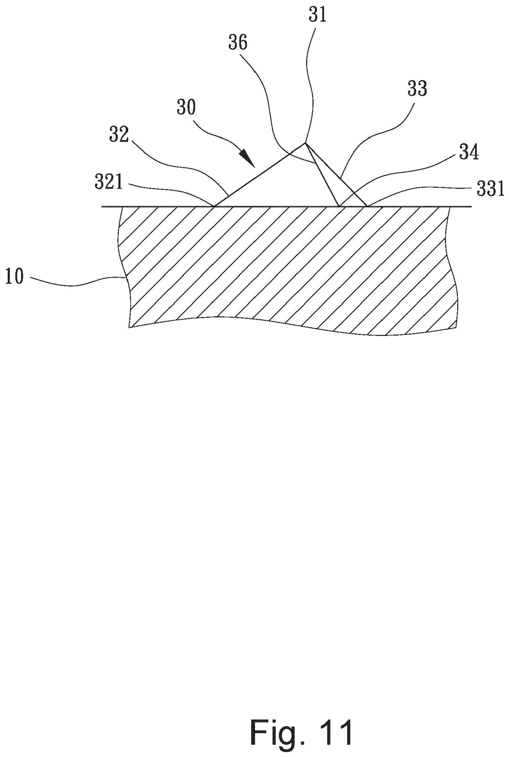

Referring to Figs. 8 to 11, a screw 100 in accordance with a second preferred embodiment of the invention is shown. The characteristics of the second preferred embodiment are substantially the same as that of the first preferred embodiment except the following: the projection 30 includes a front tip section 32 having a front tip 321, and a peak point 31 on an outer surface of the shank 10. The peak point 31 has a height h less than height H of the threaded unit 21 (see Fig. 10). A bottom point 34 is formed at a position opposing the peak point 31, i.e., the height h being calculated from the bottom point 34 to the peak point 31. The projection 30 further comprises two wings 33 each extending rearward from the tip section 32 to the threaded unit 21. One wing 33 is spaced apart from the other wing 33 by a gradually increased distance in the rear. The wing 33 has an inclined triangular surface 332 having a height at a front end 61 greater than that at a rear end 62. That is, the front end 61 is slanted toward the rear end 62. The wing 33 has a rear tip 331. In the embodiment, the rear tip 331 of the wing 33 joins the adjacent threaded unit 21. The triangular surfaces 332 are joined by a line 36 which is implemented as a straight line having a top end 31 and a bottom end 34. The straight line is inclined from the top end 31 to the bottom end 34. In the embodiment, a pyramid is formed by the bottom end 34, the top end 31, the front tip 321, and the rear tip 331 of one wing 33. Further, another pyramid is formed by the bottom end 34, the top end 31, the front tip 321, and the rear tip 331 of the other wing 33. The projection 30 consists of the two pyramids.

An orientation from the front end 61 to the rear end 62 of the projection 30 of any embodiment described above is the same as that of the threaded section 20. In the invention, the orientation is clockwise. But in other embodiments, the orientation can be counterclockwise (not shown) and details thereof is omitted herein for the sake of brevity.

While the invention has been described in terms of preferred embodiments, those skilled in the art will recognize that the invention can be practiced with modifications within the spirit and scope of the appended claims.

## Claims

1. A screw, comprising:
a shank; and
a threaded section spirally formed on an outer surface of the shank, the threaded section including a plurality of joined threaded units each having a length greater than a pitch, each of the threaded units including a closed curve having two opposing first curved sections and two opposing second curved sections;
wherein one first curved section is disposed between the two second curved sections and one second curved section is disposed between the two first curved sections;
wherein each of the threaded units further comprises two opposing high points each formed between the first curved section and the adjacent second curved section and two opposing low points each formed between the first curved section and the adjacent second curved section;
wherein one high point is disposed between the two low points and one low point is disposed between the two high points;
wherein a width of the threaded unit at the high points is the greatest and a width of the threaded unit at the low points is the least; and
wherein the width of the threaded unit is decreased from the high point to the low point.

2. The screw of claim 1, wherein the high points are joined to shape as a first spiral and the low points are joined to form a second spiral.

3. The screw of claim 1, wherein each of the threaded units cross an angle of 372 degrees.

4. The screw of claim 1, wherein each of the threaded units have an oval cross-section.

5. The screw of claim 1, further comprising at least one projection each disposed between two adjacent ones of the threaded units on the outer surface of the shank wherein the projection includes a tip section at a front end and two wings each extending rearward from the tip section to the threaded unit, and an orientation of the projection is the same as that of the threaded section.

6. The screw of claim 5, wherein the projection further comprises a top end having a height less than a top of the threaded section, a bottom end opposing the top end of the projection, and a front tip; the wing includes has a rear tip; and a pyramid is formed by the bottom end, the top end, the front tip, and the rear tip of the wing.

7. The screw of claim 6, wherein front ends of the wings are joined by a line which is a straight line having a top end and a bottom end; and wherein the straight line is inclined from the top end to the bottom end.

8. The screw of claim 5, wherein the number of the at least one projection is more than one, the projections are slant obliquely formed on an outer surface of the shank, and any two of the projections are separated by the threaded unit.

9. The screw of claim 5, wherein one wing is spaced apart from the other wing by a gradually increased distance in a rear end, and each of the wings have an inclined triangular surface having a height at a front end greater than that at the rear end.

10. The screw of claim 5, wherein the rear end of each of the wings joins the adjacent threaded unit.

11. The screw of claim 5, wherein each of the wings have a triangular cross-section, and a height of the front end of the wing is the same as that of the rear end thereof.

12. The screw of claim 11, wherein the rear end of each of the wings joins the adjacent threaded unit.

13. The screw of claim 11, wherein front ends of the wings are joined by a line which is a straight line having a top end and a bottom end; and wherein the straight line is inclined from the top end to the bottom end.

14. The screw of claim 11, wherein a height of each of the wings is less than that of the threaded unit.
